# EUROPÄISCHE PATENTANMELDUNG

(11) **EP 1 790 525 A1**
(43) Veröffentlichungstag der Anmeldung: **30.05.2007**
(21) Anmeldenummer: 06024333.4
(22) Anmeldetag: 23.11.2006
(51) Int. Cl.: B60N 2/42

(54) **Sitzrückhaltesystem**

(30) Priorität: 29.11.2005 DE 102005056869
(71) Anmelder: Irsinghausen GmbH & Co. KG, 32657 Lemgo (DE)
(72) Erfinder: Meyer, Lutz, 32689 Kalletal (DE); Granzow, Manfred, 32694 Dörentrup (DE); Wiebesiek, Hartmut, 32657 Lemgo (DE)
(74) Vertreter: DTS München

(57) **Zusammenfassung**

Die Erfindung betrifft ein Sitzrückhaltesystem zur Einschränkung der Nickbewegung eines Fahrzeugsitzes mit Schwingsystem auf Grund von auf den Fahrzeugsitz wirkenden Beschleunigungskräften oder Verzögerungskräften wobei das Sitzrückhaltesystem eine Einrichtung zur Einschränkung einer Nickbewegung des Fahrzeugsitzes nach vorne als auch nach hinten aufweist, wobei erste und zweite Zugmittel am feststehenden Teil des Fahrzeugsitzes mit Schwingsystem und schwingenden Teil des Fahrzeugsitzes mit Schwingsystem befestigbar sind und so ausgestaltet sind, dass die Nickbewegung des Fahrzeugsitzes zwischen dem feststehenden Teil des Fahrzeugsitzes mit Schwingsystem und dem schwingenden Teil des Fahrzeugsitzes mit Schwingsystem durch das erste Zugmittel nach vorne und durch das zweite Zugmittel nach hinten einschränkbar ist.

## Beschreibung

Die Erfindung betrifft eine Vorrichtung und ein Verfahren zur Einschränkung der Nickbewegung eines Fahrzeugsitzes mit Schwingsystem aufgrund von auf den Fahrzeugsitz wirkenden Beschleunigungskräften oder Verzögerungskräften.

Bekannt sind Federsysteme, sogenannte Schwingsysteme, die in Fahrzeugsitze zur Verbesserung des Komforts eingebaut werden. Ebenso sind diese Sitze zum Teil mit einem oder mehreren Verankerungspunkten des Sicherheitsgurtes ausgestattet. Beim Frontalaufprall kommt es zur Belastung des Schwingsystems, so dass es im hinteren Bereich auffedern will. Bei Belastung in Gegenrichtung, wie es beim Heckaufprall geschieht, will das Schwingsystem vorn auffedern. In beiden Fällen kommt es je nach Steifigkeit des Systems zu Bewegungen und Verformungen, die zur Verbesserung der Insassensicherheit möglichst einzuschränken sind.

In der DE 69714051 T2 sind Abfanggurte mit Retraktor dargestellt, wie sie aus dem Sicherheitsgurt bekannt sind, die im Schwingsystem eingebaut werden insbesondere zwischen dem feststehenden und schwingenden Teil im hinteren Bereich. Diese Gurte können zur Steigerung der Effektivität mit bekannten Systemen zur Gurtstraffung oder Gurtklemmung ausgestattet sein. Diese Systeme bringen eine erhebliche Verbesserung, jedoch nur für die Belastung im Frontalunfall, nicht beim Heckaufprall. In der US 5642916 wird ein System mit festen Abfanggurten zwischen dem schwingenden Teil und feststehendem Teil, sowohl im hinteren als auch im vorderen Bereich des Schwingsystems dargestellt. Nachteil dieser Lösung ist, dass das Schwingsystem zuerst vollständig ausfedern muss, bis dieser Gurt Kräfte aufnehmen kann. Hierdurch ergibt sich nur eine eingeschränkte Verbesserung.

In DE 697 14 051 T2 ist ein Fahrzeugsitz dargestellt, der mit Mitteln ausgestattet ist, die zum Blockieren der Position des Sitzkissens bei irgendeiner wählbaren Höhe zwischen den Endpositionen fähig sind.

Aufgabe der vorliegenden Erfindung ist es daher, ein Sitzrückhaltesystem und ein Verfahren zum Betreiben eines solchen Sitzrückhaltesystems bereitzustellen, dass die Nickbewegung eines Fahrzeugsitzes mit Schwingsystem einschränkt und die Nachteile des Standes der Technik vermeidet. Diese Aufgabe wird durch die Vorrichtung und das Verfahren nach den unabhängigen Ansprüchen gelöst. Weitere vorteilhafte Ausgestaltungen sind in den abhängigen Ansprüchen angegeben.

Insbesondere wird die Aufgabe gelöst durch ein Sitzrückhaltesystem zur Einschränkung der Nickbewegung eines Fahrzeugsitzes mit Schwingsystem auf Grund von auf den Fahrzeugsitz wirkenden Beschleunigungskräften oder Verzögerungskräften, umfassend erste und zweite Zugmittel, die am feststehenden Teil des Fahrzeugsitzes mit Schwingsystem und am schwingenden Teil des Fahrzeugsitzes mit Schwingsystem befestigbar sind und so ausgestaltet sind, dass die Nickbewegung des Fahrzeugsitzes zwischen dem feststehenden Teil des Fahrzeugsitzes mit Schwingsystem und dem schwingenden Teil des Fahrzeugsitzes mit Schwingsystem durch das erste Zugmittel nach vorne und durch das zweite Zugmittel nach hinten einschränkbar ist.

Bevorzugt werden als Zugmittel Gurte verwendet. Es ist auch vorgesehen Seile einzusetzen. Die Gurte sind bevorzugt aus Kunstfasern, besonders bevorzugt aus Nylon und bevorzugt aus Polypropylen. Die Zugmittel können auch aus bevorzugt hochfesten Seilen, wie z.B. basierend auf Dynema oder Kevlar bestehen. Bevorzugt ist hierbei, dass die Zugmittel vorgereckt sind und somit sich bei Belastung wenig dehnen. Bevorzugt können die Zugmittel auch Stahlseile sein. Die Zugmittel können auch aus einer Zusammensetzung der genannten Materialien bestehen. Es ist auch denkbar, dass die einzelnen Zugmittel aus einer Kombination unterschiedlicher Materialien hergestellt sind.

Durch die Zugmittel wird die Bewegung des feststehenden Teiles des Fahrzeugsitzes mit Schwingsystem und des schwingenden Teiles des Fahrzeugsitzes mit Schwingsystem begrenzt. Dazu sind die Zugmittel bevorzugt sowohl am feststehenden Teil des Fahrzeugsitzes mit Schwingsystem als auch am schwingenden Teil des Fahrzeugsitzes mit Schwingsystem befestigbar. Für die Befestigung der Zugmittel werden besonders bevorzugt Schraubverbindungen oder bevorzugt Nietverbindungen oder Klebeverbindungen angewendet. Die ersten Zugmittel haben dabei besonders bevorzugt eine Zugrichtung nach vorne und unten, bevorzugt eine Zugrichtung nach vorne oder eine Zugrichtung nach unten, wodurch es verhindert wird, dass der Sitz nach hinten nicken kann. Bevorzugt sind die ersten Zugmittel im vorderen Bereich des beweglichen Teiles des Fahrzeugsitzes mit Schwingsystem befestigt. Die Zugmittel verhindern so ein sich nach oben Bewegen des vorderen Sitzteils. Analog zu den ersten Zugmitteln haben die zweiten Zugmittel besonders bevorzugt eine Zugrichtung nach hinten und unten, bevorzugt eine Zugrichtung nach unten oder eine Zugrichtung nach hinten. Die zweiten Zugmittel sind bevorzugt am hinteren Bereich des schwingenden Teils des Fahrzeugsitzes mit Schwingsystem befestigt. Durch die zweiten zugmittel wird der hintere Teil des beweglichen Teiles eines Sitzes mit Schwingsystem darin eingeschränkt sich nach vorne oder nach oben zu bewegen. Die Nickbewegung des beweglichen Teiles des Fahrzeugsitzes mit Schwingsystem nach vorne wird somit durch die zweiten Zugmittel eingeschränkt. Neben der Befestigung am beweglichen Teil eines Fahrzeugsitzes mit Schwingsystem werden die ersten und zweiten Zugmittel bevorzugt am feststehenden Teil des Fahrzeugsitzes mit Schwingsystem oder am Fahrzeug befestigt.

Bei einer weiteren bevorzugten Ausführungsform des erfindungsgemäßen Sitzrückhaltesystems werden die Zugmittel aktiviert, wenn eine vorbestimmte Belastungsgrenze überschritten wird und nicht aktiviert, solange die vorbestimmte Belastungsgrenze nicht erreicht ist.

Auf diese Weise wird sichergestellt, dass das normale Schwingverhalten des Fahrzeugsitzes mit Schwingsystem nicht eingeschränkt wird, solange keine Aufprall-Situation vorliegt. Im normalen Betrieb ist es ja gewünscht, dass der Sitz federt, damit nicht alle vertikalen Beschleunigungen des Fahrzeugs aufgrund von Fahrbahnunebenheiten an den Fahrer weitergegeben werden. Erst bei einer Aufprall-Situation ist es gewünscht, dass das Federverhalten des Fahrzeugsitzes mit Schwingsystem und insbesondere das Einnicken des Fahrzeugsitzes nach vorne oder nach hinten eingeschränkt wird. Die vorbestimmte Belastungsgrenze besteht besonders bevorzugt in einem Beschleunigungsgrenzwert, bevorzugt in einem Kraftgrenzwert oder in einen Grenzwert für eine Bewegung.

Bei einem besonders bevorzugten Ausführungsbeispiel des erfindungsgemäßen Sitzrückhaltesystems werden die Zugmittel am feststehenden Teil eines Fahrzeugsitzes mit Schwingsystem oder dem schwingenden Teil eines Fahrzeugsitzes mit Schwingsystem befestigt, wobei sie an dem Ende, an dem sie mit dem Fahrzeugsitz verbunden werden, Gurtstraffer oder Gurtklemmer aufweisen.

Durch die Gurtstraffer oder Gurtklemmer wird die Einschränkung der Nickbewegung des beweglichen Teils des Fahrzeugsitzes auch bei einer möglichen Höhenverstellung sowie bei unterschiedlichen Gewichten der auf dem Sitz sitzenden Person gewährleistet, da das Zugmittel langsam ausgelassen werden kann ohne zu blockieren, wohingegen es blockiert wird, wenn die vorbestimmte Belastungsgrenze überschritten wird. Das gewünschte Verhalten ist ähnlich dem eines konventionellen Sicherheitsgurtes, der bei normalen Bewegungen der angeschnallten Person nachgibt aber bei schnellen Bewegungen und großer Belastung sicher blockiert. Besonders bevorzugt werden Gurtstraffer eingesetzt, bei denen ein besonders verzögerungsfreies Auslöseverhalten vorliegt. Bevorzugt werden auch solche Systeme eingesetzt, die die Beschleunigung des Fahrzeuges auswerten und in Abhängigkeit vom Beschleunigungszustand eine Straffung des Zugmittels auslösen, wenn ein auf eine Kollision hindeutender Fahrzeugbeschleunigungswert gemessen wird. Bevorzugt werden die Beschleunigungswerte am Fahrzeugsitz gemessen. Es ist aber auch möglich mittels einer Datenverbindung zur Fahrzeugsteuerung auf die Daten der Fahrzeugsteuerung zurückzugreifen. Besonders bevorzugt wird eine Synchronisierung der aktiven Gurtstraffung mit dem Auslösen der Fahrzeug-Airbags vorgesehen.

Bei einem weiteren bevorzugten Ausführungsbeispiel des Sitzrückhaltesystems ist ein Doppelgurt-Retraktor vorgesehen, in den die Zugmittel geführt sind.

Der Doppelgurt-Retraktor ist so beschaffen, dass er das erste Zugmittel von vorne hält und einrollt und das zweite Zugmittel von hinten einrollt und hält. Dabei kann der Doppelgurt-Retraktor sowohl das Einnicken nach vorne verhindern, indem er das zweite zugmittel hält und das Einnicken nach hinten verhindern, indem er das erste Zugmittel hält.

Bei einem weiteren bevorzugten Ausführungsbeispiel des erfindungsgemäßen Sitzrückhaltesystems sind die Zugmittel als durchgehendes Zugmittel ausgebildet, das beidseitig in dem Doppelgurt-Retraktor eingeführt ist. Die ersten und zweiten Zugmittel sind dadurch kinematisch gekoppelt. Der Doppelgurt-Retraktor zieht hierbei bevorzugt beide Zugmittel ein, bzw. lässt beide Zugmittel jeweils gleichzeitig aus. Diese Ausführungsform ist kostengünstig realisierbar, da nur ein Retraktor integriert zu werden braucht.

Bei einer weiteren bevorzugten Ausführungsform des erfindungsgemäßen Sitzrückhaltesystems sind Umlenkpunkte vorgesehen, über die die Zugmittel geführt sind.

Die Umlenkpunkte dienen dazu, die Zugrichtung der Zugmittel umzulenken. Dadurch wird eine größere Flexibilität für die Befestigung der Zugmittel erreicht. Die Befestigungspunkte müssen somit nicht mehr über eine gerade Linie verbindbar sein, sondern die zugmittel können an Bauteilen vorbeigeführt werden, indem sie über die Umlenkpunkte geführt sind. Bevorzugt ist die Reibung zwischen dem Zugmittel und dem Umlenkpunkt gering, damit ein möglichst großer Anteil der Zugkraft genutzt werden kann. Für die Lagerung an den Umlenkpunkten gibt es verschiedene technische Möglichkeiten. Besonders bevorzugt weisen die Umlenkpunkte gelagerte Rollen, oder bevorzugt Gleitstellen auf.

Bei einem weiteren bevorzugten Ausführungsbeispiel der vorliegenden Erfindung ist ein Sitzrückhaltesystem vorgesehen, das elektromechanische Komponenten und Beschleunigungssensoren zur Erfassung der Fahrzeugbeschleunigung aufweist und über elektrische Signale steuerbar und/oder regelbar ist.

Mit diesem Sensor-Aktorsystem lässt sich ein sehr schnelles und genaues Auslösen des Sitzrückhaltesystems bei einer definierten Fahrsituation erzielen. Es ist so möglich, das Sitzrückhaltesystem schon zu aktivieren, bevor die am Sitz wirkenden Beschleunigungskräfte ein Einnicken des Sitzes verursachen. Dadurch kann das Einnicken des Sitzes besonders wirkungsvoll vermieden werden. Bevorzugt ist hierbei, dass die Sensorik und Elektronik den kritischen Fahrzustand sehr genau diagnostiziert und die Steuerungskette das Sitzrückhaltesystem dann schnell aktiviert. Als elektrische Komponenten sind auch bevorzugt die bereits vorgesehenen fahrzeugseitigen Komponenten verschaltet.

Bei einer besonders bevorzugten Ausführungsform des erfindungsgemäßen Sitzrückhaltesystems ist ein Doppelstütz-System im vorderen und/oder hinteren Bereich des Sitzes vorhanden, das Abstützelemente aufweist, die beim Eintreten des Belastungsfalls in den Bewegungsbereich des Schwingsystems einschwenken, so dass die Bewegung des Schwingsystems blockiert wird.

Die vorderen Abstützelemente verhindern dabei ein Einnicken nach vorne und die hinteren Abstützelemente verhindern ein Einnicken nach hinten. Die Abstützelemente werden dazu bevorzugt in den Bewegungsbereich von Teilen des schwingenden Teiles eines Fahrzeugsitzes mit Schwingsystem oder des Schwingsystems gebracht und blockieren so die Bewegung des schwingenden Teiles eines Fahrzeugsitzes mit Schwingsystem. Besonders bevorzugt werden die Abstützelemente mit einer Schwenkbewegung oder bevorzugt mit einer linearen Bewegung oder mit einer Kombination aus beiden in Position gebracht. Bevorzugt sind Endanschläge vorhanden, die die genaue Positionierung der Abstützelemente gewährleisten. Besonders bevorzugt werden die Abstützelemente durch die Bewegung des schwingenden Teiles des Fahrzeugsitzes mit Schwingsystem über eine kinematische Kopplung in Position gebracht oder bevorzugt werden die Abstützelemente mittels pneumatischen Zylindern in Position gebracht oder sie werden mit elektrischen Antrieben in Position gebracht. Die kinematische Kopplung mit dem schwingenden Teil des Fahrzeugsitzes mit Schwingsystem hat den Vorteil, dass es eine technisch sehr einfache Lösung ist, die keiner weiteren Steuerung bedarf. Elektrische und pneumatische Systeme bieten den Vorteil, dass sie in Verbindung mit einer entsprechenden Sensorik schon bei sehr kleinen Bewegungen des schwingenden Teiles des Fahrzeugsitzes mit Schwingsystem oder aufgrund von mit Sensoren ermittelten Beschleunigungswerten ausgelöst werden können. Ein schnelleres und genaueres Ansprechen ist so realisierbar.

Bei einer weiteren bevorzugten Ausführungsform des erfindungsgemäßen Sitzrückhaltesystems sind die Abstützelemente des Doppelstütz-Systems vor dem Betätigen des Doppelstützsystems in einem definierten Abstand vom schwingenden Teil des Fahrzeugsitzes mit Schwingsystem oder daran befestigten Teilen mitführbar und beim Betätigen des Doppelstützsystems arretierbar.

Das Nachführen der Abstützelemente kann dabei linear als auch mit Dreh oder Schwenkbewegungen erfolgen. Im Einsatzfall befinden sich die Abstützelemente dadurch schon in der Nähe des schwingenden Teils des Fahrzeugsitzes mit Schwingsystem. Sie müssen daher im Einsatzfall nicht erst in Position gebracht sondern lediglich arretiert werden. Daher können mit dieser Ausführungsform sehr kurze Reaktionszeiten vom Aufprall bis zum Abstützen des Sitzes erreicht werden.

Bei einer weiteren bevorzugten Ausführungsform des erfindungsgemäßen Sitzrückhaltesystems sind die Abstützelemente des Doppelstütz-Systems als Excenter ausgestaltet und der Abstand der Abstützelemente vom schwingenden Teil des Fahrzeugsitzes mit Schwingsystem ist durch Drehung der Abstützelemente um Drehpunkte veränderbar.

Durch die Drehung der Excenter wird der Abstand zum schwingenden Teil des Fahrzeugsitzes mit Schwingsystem eingestellt. Beim Einsatzfall wird die Drehfreiheit der Excenter blockiert. Für das Blockieren der Excenter können mechanisch, elektrisch, pneumatisch oder hydraulisch ausfahrbare Bolzensysteme eingesetzt werden. Bevorzugt ist die Oberfläche der Excenter rau oder mit einem Zahnprofil Zur Verbesserung der Reibung gegen den schwingenden Teil des Fahrzeugsitzes mit Schwingsystem versehen, damit aus dem Auflagedruck des schwingenden Teil des Fahrzeugsitzes mit Schwingsystem auf den Excenter ein möglichst geringes Drehmoment auf den Excenter um den Drehpunkt resultiert.

Bei einer bevorzugten Ausführungsform des erfindungsgemäßen Sitzrückhaltesystems sind die Abstützelemente des Doppelstütz-Systems unter Verwendung von vorderen und hinteren Seilzügen ausschwenkbar oder ausfahrbar.

Die Seilzüge leiten die Bewegungen des schwingenden Teils eines Fahrzeugsitzes mit Schwingsystem bis zu den Abstützelementen weiter und führen dazu, dass bei einer Bewegung des beweglichen Teils eines Fahrzeugsitzes mit Schwingsystem über die Seilzüge die Abstützelemente ausgeschwenkt oder ausgefahren werden. Die Verbindung der Abstützelemente über Seilzüge mit dem beweglichen Teil eines Fahrzeugsitzes mit Schwingsystem ist konstruktiv sehr einfach und kostengünstig realisierbar. Ferner lassen sich die Seilzüge über Umlenkpunkte sehr flexibel verlegen. Bei entsprechender Wahl der Seilzüge und auch der Umlenkstellen hat das System so wenig Spiel, ist sehr leicht und hat deswegen geringe Massenträgheit und es treten geringe Reibkräfte im System auf.

Bei einer bevorzugten Ausführungsform des erfindungsgemäßen Sitzrückhaltesystems ist der Doppelgurt-Retraktor als Doppelseilstraffer ausgeführt und die Gurte sind als Seile ausgeführt.

Anstelle der Gurte werden bei dieser Ausführungsform bevorzugt Seile verwendet. Die Seile haben dabei die gleiche Funktion wie die Gurte bei den vorherigen Ausführungsformen. Der Doppelgurt-Retraktor wird hierbei durch einen Doppelseilstraffer ersetzt. Bevorzugt werden Kunststoffseile zum Beispiel aus Dynema oder Kevlar verwendet, es können aber auch bevorzugt Stahlseile verwendet werden. Im Falle der Kunststoffseile eignen sich besonders gut vorgereckte Seile, da diese eine geringere Elastizität aufweisen. Stahlseile insbesondere solche aus nicht rostendem Stahl haben den Vorteil, dass sie widerstandsfähiger gegen Einschnitte durch scharfe Gegenstände sind und beim Kontakt mit Substanzen wie z.B. Ölen und dergleichen sich nicht verändern.

Bei einer besonders bevorzugten Ausführungsform des erfindungsgemäßen Sitzrückhaltesystems ist das Sitzrückhaltesystem Teil eines Fahrzeugsitzes.

Die Aufgabe wird auch durch ein Verfahren zum Einschränken von Nicken eines Fahrzeugsitzes bei Beschleunigung oder Verzögerung gelöst, bei dem erste Zugmittel vorgesehen sind, die bei Beschleunigung des Fahrzeugsitzes Nickbewegungen nach hinten einschränken und zweite Zugmittel vorgesehen sind, die bei Verzögerung des Fahrzeugsitzes Nickbewegungen nach vorne einschränken.

Bei einer bevorzugten Ausführungsform des erfindungsgemäßen Sitzrückhaltesystems wird das Sitzrückhaltesystem verwendet, um ein Verfahren zum Einschränken von Nicken eines Fahrzeugsitzes bei Beschleunigung oder Verzögerung auszuführen.

Im Folgenden wollen weitere vorteilhafte Ausgestaltungen der Erfindung anhand der Zeichnungen erläutert werden. Hierbei zeigt
- Fig. 1: eine schematische Darstellung eines erfindungsgemäßen Sitzrückhaltesystems
- Fig. 2: eine schematische Darstellung eines erfindungsgemäßen Sitzrückhaltesystems mit Doppelstützsystem
- Fig. 3: eine schematische Darstellung eines erfindungsgemäßen Sitzrückhaltesystems mit Doppelstützsystem

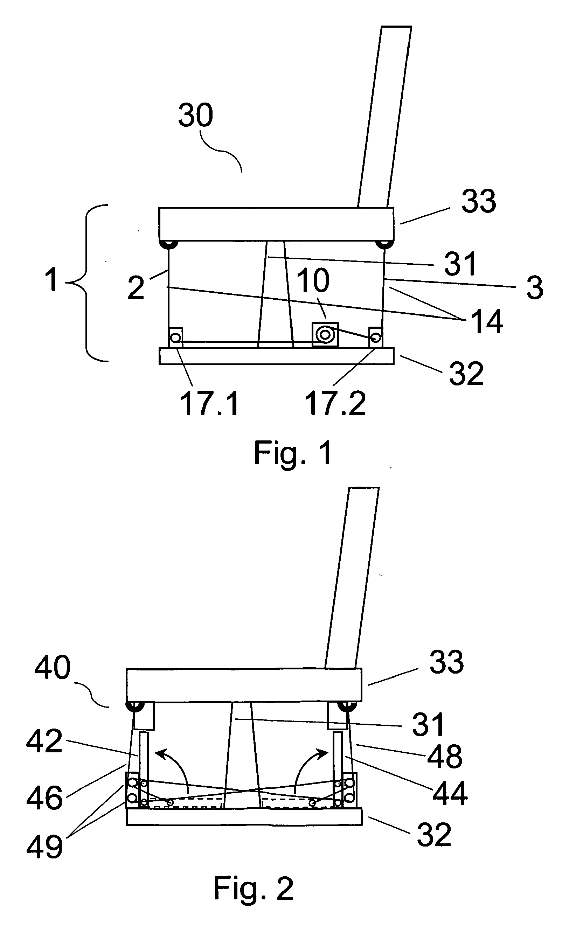

Fig. 1 zeigt eine schematische Darstellung eines Ausführungsbeispiels des erfindungsgemäßen Sitzrückhaltesystems 1 ohne Doppelstütz-System 40. Hierbei ist ein Rahmenelement eines Sitzes mit Schwingsystem 30 umfassend ein schwingenden Teil 33 eines Fahrzeugsitzes mit Schwingsystem oberhalb eines feststehenden Teils 32 eines Fahrzeugsitzes mit Schwingsystem angeordnet. Dazwischen befindet sich ein Schwingsystem 31. Das Schwingsystem 31 ist sowohl am feststehenden Teil 32 des Fahrzeugsitzes mit Schwingsystem als auch am schwingenden Teil 33 des Fahrzeugsitzes mit Schwingsystem befestigt. Ein Doppelgurt-Retraktor 10 ist an dem feststehenden Teil 32 des Fahrzeugsitzes mit Schwingsystem befestigt. Vorne und hinten an dem feststehenden Teil 32 des Fahrzeugsitzes mit Schwingsystem sind Umlenkpunkte 17.1, 17.2 befestigt. Ein durchgehender Gurt 14 ist vorne an der Unterseite des beweglichen Teils 33 des Fahrzeugsitzes mit Schwingsystem befestigt, verläuft dann nach unten über den vorderen Umlenkpunkt 17.1, dann zur Mitte hin in den Doppelgurt-Retraktor 10 hinein, von dort zum hinteren Umlenkpunkt 17.2 und dann nach oben zum beweglichen Teil 33 des Fahrzeugsitzes mit Schwingsystem, wo er befestigt ist. Der Gurt 14 bildet damit inegral ein erstes Zugmittel 2 und ein zweites Zugmittel 3.

Im Einsatz führt ein Frontalaufprall des Fahrzeuges dazu, dass der schwingende Teil 33 des Fahrzeugsitzes mit Schwingsystem nach vorne einnicken will. Dabei wird jedoch der Teil des durchgehenden Gurtes 14, der sich zwischen dem Doppelgurt-Retraktor 10 und dem Punkt befindet, wo er am hinteren Teil des beweglichen Teils 33 des Fahrzeugsitzes mit Schwingsystem befestigt ist, gespannt. Der hintere Teil des beweglichen Teils 33 des Fahrzeugsitzes mit Schwingsystem kann sich dadurch hinten nicht weiter anheben. Bei einem Heckaufprall wird aufgrund der Beschleunigungskräfte ein Einnicken des Fahrzeugsitzes nach hinten verursacht. Bei einem Einnicken hebt sich der vordere Teil des beweglichen Teils 33 des Fahrzeugsitzes mit Schwingsystem und der hintere Teil des beweglichen Teils 33 des Fahrzeugsitzes mit Schwingsystem senkt sich. Beim Anheben des vorderen Teils des beweglichen Teils 33 des Fahrzeugsitzes mit Schwingsystem wird der vordere Teil des durchgehenden Gurtes über den Umlenkpunkt 17.1 aus dem Doppelgurt-Retraktor herausgezogen. Beim schnellen Herausziehen des Gurtes aus dem Doppelgurt-Retraktor 10 blockiert dieser aber, wodurch ein weiteres Herausziehen des Gurtes aus dem Doppelgurt-Retraktor 10 verhindert wird. Somit wird aber auch kein Gurt mehr nachgegeben und der vordere Teil des beweglichen Teils 33 des Fahrzeugsitzes mit Schwingsystem wird vom vorderen Teil des durchgehenden Gurtes am Anheben gehindert.

Der Doppelgurt-Retraktor 10 fixiert demnach den durchgehenden Gurt 14 bei schnellen Bewegungen in beide Richtungen. Bei einem Frontalaufprall wird der hintere Teil des durchgehenden Gurtes 14 blockiert und dieser schränkt das Anheben des hinteren Teils des beweglichen Teils 33 des Fahrzeugsitzes mit Schwingsystem ein. Bei einem Heckaufprall geschieht das Gleiche vorne. Der vordere Teil des beweglichen Teils 33 des Sitzes mit Schwingsystem wird am Anheben durch den vorderen Teil des durchgehenden Gurtes 14 gehindert, da dieser über den Umlenkpunkt geführt im Doppelgurt-Retraktor fixiert wird. Mit dieser Anordnung wird der Anteil des Einnickens des beweglichen Teils 33 des Fahrzeugsitzes mit Schwingsystem eingeschränkt, der auf das Anheben des vorderen oder hinteren Teiles des beweglichen Teils 33 des Fahrzeugsitzes mit Schwingsystem zurückzuführen ist.

In Fig. 2 ist eine besonders bevorzugte Ausführungsform des Doppelstütz-Systems 40 dargestellt. Es sind der bewegliche Teil 33 und der feststehende Teil 32 sowie das Schwingsystem 31 eines Fahrzeugsitzes mit Schwingsystem in schematischer Darstellung zu erkennen. Ein vorderes Abstützelement 42 und ein hinteres Abstützelement 44 sind in einer unteren und einer aufgestellten Position dargestellt. Pfeile symbolisieren die Hochklappbewegung. In der hochgeklappten Lage finden sich die Abstützelemente 42, 44 dicht unter dem beweglichen Teil 33 des Fahrzeugsitzes mit Schwingsystem. Ein vorderer Seilzug ist an der Unterseite am vorderen Teil des beweglichen Teils 33 des Fahrzeugsitzes mit Schwingsystem befestigt, verläuft dann über am feststehenden Teil 32 des Fahrzeugssitze mit Schwingsystem angebrachten Umlenkpunkten zum gegenüberliegenden hinteren Abstützelement 44. Analog ist ein hinterer Seilzug am hinteren Teil des beweglichen Teils 33 des Fahrzeugsitzes mit Schwingsystem befestigt. Dieser verläuft von dort über Umlenkpunkte zum vorderen Teil des feststehenden Teils 32 des Fahrzeugsitzes mit Schwingsystem zum vorderen Abstützelement 42.

Ein Einnicken des beweglichen Teils 33 des Fahrzeugsitzes nach vorne wie zum Beispiel bei einem Auffahrunfall führt zu einem Zug am hinteren Seilzug 48. Dieser Seilzug leitet die Zugbewegung über die Umlenkpunkte des Dopelstütz-Systems 49 zum drehbar gelagerten vorderen Abstützelement 42 weiter, welches durch den Zug nach oben aufgestellt wird. Das aufgestellte Abstützelement schränkt die Bewegung des schwingenden Teils 33 des Fahrzeugsitzes mit Schwingsystem nach unten ein. Dadurch wird das Einnicken nach vorne des beweglichen Teils 33 des Fahrzeugsitzes mit Schwingsystem eingeschränkt. Im umgekehrten Fall bei einem Aufprall von hinten senkt sich der schwingende Teil 33 des Fahrzeugsitzes mit Schwingsystem, wodurch sich der vordere Teil des schwingenden Teils 33 des Fahrzeugsitzes mit Schwingsystem anhebt. Dabei wird der vordere Seilzug 46 angezogen und diese Bewegung über die Umlenkpunkte des Doppelstütz-Systems 49 zum hinteren Abstützelement 44 weitergeleitet. Das hintere Abstützelement 44 wird von dem Seilzug hochgezogen und blockiert aufgestellt die Abwärtsbewegung des hinteren Teils des beweglichen Teils 33 des Fahrzeugssitzes mit Schwingsystem. Das Einnicken des Fahrzeugsitzes nach hinten wird dadurch eingeschränkt.

In Verbindung mit dem Doppelgurt-Retraktor 10 wird dadurch sowohl die Abwärtsbewegung einer Seite des beweglichen Teils 33 des Fahrzeugsitzes als auch die Bewegung nach oben der anderen Seite des beweglichen Teils 33 des Fahrzeugsitzes mit Schwingsystem eingeschränkt. Beide Maßnahmen zusammen führen zu einer wirksamen Einschränkung der Nickbewegung des Fahrzeugsitzes sowohl nach hinten als auch nach vorne.

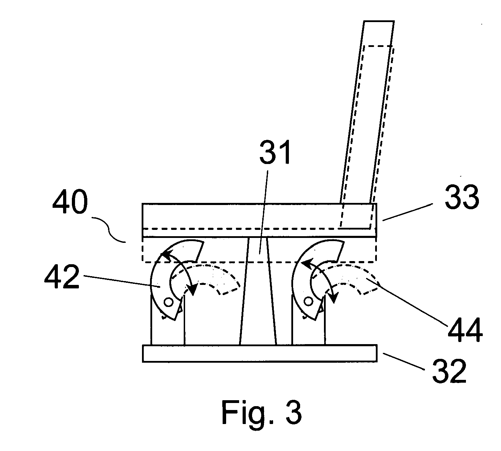

In Fig. 3 ist eine besonders bevorzugte Ausführungsform des Doppelstütz-Systems 40 dargestellt. Es sind der bewegliche Teil 33 und der feststehende Teil 32 sowie das Schwingsystem 31 eines Fahrzeugsitzes mit Schwingsystem in schematischer Darstellung dargestellt. Ein vorderes Abstützelement 42 und ein hinteres Abstützelement 44 sind in einer oberen Position und gestrichelt in einer unteren Position dargestellt. Die Abstützelemente 42, 44 sind hier als Excenter ausgebildet, die drehbar gelagert sind. Pfeile symbolisieren die Drehbewegung. Zwischen den Abstützelementen und dem beweglichen Teil 33 eines Fahrzeugsitzes mit Schwingsystem ist ein geringer Abstand.

Im Betrieb wird beim Einfedern des beweglichen Teils 33 eines Fahrzeugsitzes mit Schwingsystem der Abstand zwischen den Abstützelementen und dem beweglichen Teil 33 eines Fahrzeugsitzes mit Schwingsystem durch Drehung der als Excenter geformten Abstützelemente erreicht. Vor dem Auslösen berühren sie demnach den beweglichen Teil 33 eines Fahrzeugsitzes mit Schwingsystem normalerweise nicht. Beim Einknicken des beweglichen Teils 33 des Fahrzeugsitzes nach vorne wie zum Beispiel bei einem Auffahrunfall wird das vordere Abstützelement 42 arretiert und seine Drehbarkeit verhindert. Dadurch stößt der vordere Teil des beweglichen Teils 33 eines Fahrzeugsitzes mit Schwingsystem gegen das vordere Abstützelement 42 und das Einnicken des Fahrzeugsitzes nach vorne wird verhindert. Beim Einnicken des beweglichen Teils 33 des Fahrzeugsitzes nach hinten wie zum Beispiel bei einem Heckaufprall wird das hintere Abstützelement 44 arretiert und seine Drehbarkeit verhindert. Dadurch stößt der hintere Teil des beweglichen Teils 33 eines Fahrzeugsitzes mit Schwingsystem gegen das hintere Abstützelement 42 und das Einnicken des Fahrzeugsitzes nach hinten wird verhindert.

Das Arretieren beider Abstützelemente 42, 44 verhindert wohl das Einnicken nach vorne als auch nach hinten des beweglichen Teils 33 eines Fahrzeugsitzes mit Schwingsystem. Bei einem Aufprall ist dies vorteilhaft, da hier oft Nickbewegungen nach vorne und nach hinten zeitlich aufeinander folgend auftreten.

Die dargestellte Ausführungsform verhindert somit ein Einnicken nach vorne als auch nach hinten. Die Abstützelemente 42, 44 müssen dabei im Einsatzfall nicht erst in Position gebracht werden, da sie ja in einem definierten Abstand vom beweglichen Teil 33 des Fahrzeugsitzes gehalten werden, sondern werden lediglich arretiert, so dass sie sich nicht mehr drehen können. Der Vorteil liegt daher in einem besonders guten dynamischen Verhalten, d.h. einem schnellen Reagieren dieser Ausführungsform im Einsatzfall.

Mit dem erfindungsgemäßen Sitzrückhaltesystem und dem Verfahren zum Einschränken von Nicken eines Fahrzeugsitzes bei Beschleunigung oder Verzögerung wurde ein Sitzrückhaltesystem bereitgestellt, das das Einnicken des Fahrzeugsitzes sowohl bei einer großen Verzögerung wie zum Beispiel im Fall eines Auffahrunfalls als auch die Einnickbewegung nach hinten zum Beispiel bei einem Auffahrunfall durch ein anderes Fahrzeug von hinten, einschränkt. Zugmittel verhindern dabei das Anheben des Fahrzeugsitzes und auf der gegenüberliegenden Sitzseite schränken Abstützelemente die Abwärtsbewegung des Sitzes ein. Diese Kombination erzielt eine besonders wirkungsvolle Einschränkung der Nickbewegung. Da sowohl im vorderen als auch im hinteren Sitzbereich Zugmittel und Abstützelemente vorhanden sind, werden sowohl Nickbewegungen nach vorne als auch Nickbewegungen nach hinten eingeschränkt. Das Sitzrückhaltesystem ist daher geeignet, die Sicherheit einer Person auf dem Fahrzeugsitz sowohl bei einem Auffahrunfall als auch bei einem Heckaufprall zu erhöhen.

### Bezugszeichenliste

- 1: Sitzrückhaltesystem
- 2: Erste Zugmittel
- 3: Zweite zugmittel
- 10: Doppelgurt-Retraktor
- 14: Durchgehender Gurt
- 17: Umlenkpunkte
- 30: Rahmenelement eines Sitzes mit Schwingsystem
- 31: Schwingsystem
- 32: Feststehender Teil eines Fahrzeugsitzes mit Schwingsystem
- 33: Schwingender Teil eines Fahrzeugsitzes mit Schwingsystem
- 40: Doppelstütz-System
- 42: Vorderes Abstützelement
- 44: Hinteres Abstützelement
- 46: Vorderer Seilzug
- 48: Hinterer Seilzug
- 49: Umlenkpunkte des Doppelstützsystems

## Patentansprüche

1. Sitzrückhaltesystem (1) zur Einschränkung der Nickbewegung eines Fahrzeugsitzes mit Schwingsystem auf Grund von auf den Fahrzeugsitz wirkenden Beschleunigungskräften oder Verzögerungskräften
**dadurch gekennzeichnet, dass**
das Sitzrückhaltesystem (1) eine Einrichtung zur Einschränkung einer Nickbewegung des Fahrzeugsitzes nach vorne als auch nach hinten aufweist,
wobei
erste und zweite Zugmittel (2, 3) am feststehenden Teil (32) des Fahrzeugsitzes mit Schwingsystem und schwingenden Teil (33) des Fahrzeugsitzes mit Schwingsystem befestigbar sind und so ausgestaltet sind, dass die Nickbewegung des Fahrzeugsitzes zwischen dem feststehenden Teil (32) des Fahrzeugsitzes mit Schwingsystem und dem schwingenden Teil (33) des Fahrzeugsitzes mit Schwingsystem durch das erste Zugmittel nach vorne und durch das zweite Zugmittel nach hinten einschränkbar ist.

2. Sitzrückhaltesystem (1) nach Anspruch 1
**dadurch gekennzeichnet, dass**
die Zugmittel (2, 3) aktiviert werden, wenn eine vorbestimmte Belastungsgrenze überschritten wird und nicht aktiviert sind, so lange die vorbestimmte Belastungsgrenze nicht erreicht ist.

3. Sitzrückhaltesystem (1) nach Anspruch 1 oder 2
**dadurch gekennzeichnet, dass**
die zugmittel (2, 3) Gurte und/oder Seile aufweisen.

4. Sitzrückhaltesystem (1) nach einem der vorhergehenden Ansprüche
**dadurch gekennzeichnet, dass**
die Zugmittel (2, 3) am feststehenden Teil (32) eines Fahrzeugsitzes mit Schwingsystem oder dem schwingenden Teil (33) eines Fahrzeugsitzes mit Schwingsystem befestigbar sind, wobei sie an einem Ende, an dem Sie mit dem Fahrzeugsitz verbindbar sind, Gurtstraffer (15) oder Gurtklemmer (16) aufweisen.

5. Sitzrückhaltesystem (1) nach einem der vorhergehenden Ansprüche
**dadurch gekennzeichnet, dass** es einen Doppelgurt-Retraktor (10) aufweist, in den die Zugmittel (2, 3) geführt sind.

6. Sitzrückhaltesystem (1) nach einem der vorhergehenden Ansprüche
**dadurch gekennzeichnet, dass**, die Zugmittel (2, 3) als durchgehende Zugmittel (4) ausgebildet sind, die beidseitig in den Doppelgurt-Retraktor (10) geführt sind.

7. Sitzrückhaltesystem (1) nach einem der vorhergehenden Ansprüche
**dadurch gekennzeichnet, dass** es
Umlenkpunkte (17) aufweist über die die Zugmittel (2, 3) geführt sind.

8. Sitzrückhaltesystem (1) nach einem der vorhergehenden Ansprüche
**dadurch gekennzeichnet, dass**
das Sitzrückhaltesystem (1) elektromechanische Komponenten aufweist und über elektrische Signale steuerbar und/oder regelbar ist und Beschleunigungssensoren zur Erfassung der Fahrzeugbeschleunigung aufweist.

9. Sitzrückhaltesystem (1) nach einem der vorhergehenden Ansprüche
**dadurch gekennzeichnet, dass**
es ein Doppelstütz-System (40) im vorderen und/oder hinteren Bereich des Sitzes Abstützelemente (42, 44) aufweist, die beim Eintreten des Belastungsfalls in den Bewegungsbereich des Schwingsystems (31) geschwenkt werden können, so dass die Bewegung des Schwingsystems (1) blockiert wird.

10. Sitzrückhaltesystem (1) nach Anspruch 9
**dadurch gekennzeichnet, dass**
das Doppelstütz-System (40) durch Bewegungen oder durch Verformungen oder durch Beschleunigungen über ein elektromechanisches Sensor-Aktor-System oder rein mechanisch betätigbar ist.

11. Sitzrückhaltesystem (1) nach Anspruch 9 und/oder 10
**dadurch gekennzeichnet, dass**
die Abstützelemente (40, 42) des Doppelstütz-Systems (40) unter Verwendung von vorderen und hinteren Seilzügen (46, 48) ausschwenkbar oder ausfahrbar sind.

12. Sitzrückhaltesystem (1) nach einem der Ansprüche 9 bis 11
**dadurch gekennzeichnet, dass**
die Abstützelemente (40, 42) des Doppelstütz-Systems (40) vor dem Betätigen des Doppelstützsystems (40) in einem definierten Abstand vom schwingenden Teil (33) des Fahrzeugsitzes mit Schwingsystem oder daran befestigten Teilen beabstandet mitführbar ist und beim Betätigen des Doppelstützsystems (40) arretierbar ist.

13. Sitzrückhaltesystem (1) nach Anspruch 12
**dadurch gekennzeichnet, dass**
die Abstützelemente (40, 42) des Doppelstütz-Systems (40) als Excenter ausgestaltet sind und der Abstand der Abstützelemente (40, 42) vom schwingenden Teil (33) des Fahrzeugsitzes mit Schwingsystem durch Drehung der Abstützelemente (40, 42) um Drehpunkte veränderbar ist.

14. Sitzrückhaltesystem (1) nach einem der vorhergehenden Ansprüche
**dadurch gekennzeichnet, dass**
die vorderen oder hinteren Seilzüge (46, 48) durch das Anheben des dem jeweiligen Abstützelement (40, 42) gegenüberliegenden Schwingenden Teils eines Fahrzeugsitzes mit Schwingsystem (33) beim Nicken des Fahrzeugsitzes bei Beschleunigung oder Verzögerung betätigbar sind.

15. Sitzrückhaltesystem (1) nach einem der Ansprüche 4 bis 11
**dadurch gekennzeichnet, dass**
der Doppelgurt-Retraktor (10) als Doppelseilstraffer ausgeführt und die Gurte als Seile ausgeführt sind.

16. Fahrzeugsitz umfassend ein Sitzrückhaltesystem (1) nach einem der vorhergehenden Ansprüche.

17. Verfahren zum Einschränken von Nicken eines Fahrzeugsitzes bei Beschleunigung oder Verzögerung
**dadurch gekennzeichnet, dass**
erste Zugmittel (2) vorgesehen sind, die bei Beschleunigung des Fahrzeugsitzes Nickbewegungen nach hinten einschränken und zweite Zugmittel (3) vorgesehen sind, die bei Verzögerung des Fahrzeugsitzes Nickbewegungen nach vorne einschränken.

18. Verwendung eines Sitzrückhaltesystems (1) nach einem der vorhergehenden auf ein Sitzrückhaltesystem (1) gerichteten Ansprüche zur Durchführung eines Verfahrens nach einem der vorhergehenden, auf ein Verfahren gerichteten Ansprüche.
